(19) Europäisches Patentamt / European Patent Office / Office européen des brevets

(11) **EP 4 657 739 A1**

(12) **EUROPEAN PATENT APPLICATION**
published in accordance with Art. 153(4) EPC

(43) Date of publication:
03.12.2025 Bulletin 2025/49

(21) Application number: 24747139.4

(22) Date of filing: 12.01.2024

(51) International Patent Classification (IPC):
*H02M 3/155* (2006.01)

(52) Cooperative Patent Classification (CPC):
H02M 3/155

(86) International application number:
PCT/JP2024/000694

(87) International publication number:
WO 2024/157808 (02.08.2024 Gazette 2024/31)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 23.01.2023 JP 2023008407

(71) Applicant: **Panasonic Intellectual Property Management Co., Ltd.**
**Kadoma-shi, Osaka 571-0057 (JP)**

(72) Inventor: **SAWADA, Naoki**
**Kadoma-shi, Osaka 571-0057 (JP)**

(74) Representative: **Novagraaf International SA**
**Chemin de l'Echo 3**
**1213 Onex, Geneva (CH)**

(54) **STEP-DOWN CONVERTER**

(57) The problem is to contribute to downsizing while reducing common mode noise. A step-down converter (100) includes a positive electrode input terminal (T1) and a negative electrode input terminal (T2), a positive electrode output terminal (T3) and a negative electrode output terminal (T4), a first positive-side wiring section (W11), a first negative-side wiring section (W12), a second positive-side wiring section (W21), a second negative-side wiring section (W22), a first capacitor (1), a second capacitor (2), a first inductor (11), a second inductor (12), a first switching element (Q1), a second switching element (Q2), a third inductor (13), a third capacitor (3), a fourth capacitor (4), a fourth inductor (14), a ground conductor member (9), a fifth capacitor (5), a sixth capacitor (6), and a seventh capacitor (7). The seventh capacitor (7) is connected between a fifth node (N5) and the first capacitor (1).

FIG. 1

## Description

### Technical Field

The present disclosure generally relates to a step-down converter, and more particularly relates to a step-down converter including a switching element.

### Background Art

Recently, the switching frequency of switching elements has been increased more and more significantly to reduce the size of passive components included in a switching power supply circuit. Nevertheless, an increase in the switching frequency would lead to an increase in electromagnetic noise. In particular, in switching power supply circuits, common mode noise will dominate on the frequency band of 1 MHz to 300 MHz (hereinafter referred to as a "MHz band"). That is why it is important to reduce the common mode noise to deal with such a significant increase in the switching frequency.

Patent Literature 1 discloses a power supply circuit having the ability to reduce the common mode noise.

The power supply circuit of Patent Literature 1 includes a DC/DC converter and a choke coil. The DC/DC converter includes a switching element for switching a DC input voltage supplied from a DC power supply and supplies, to a load, a DC output voltage according to the duty cycle of the on-time to off-time of the switching element. The DC/DC converter includes an input side capacitor, a transistor (serving as the switching element), a diode, and an output side capacitor.

The choke coil includes a pair of winding wires which are wound in mutually opposite directions and are connected between the DC power supply and the DC/DC converter. The power supply circuit of Patent Literature 1 reduces the noise generated between the DC power supply and the load by using the choke coil.

As the switching frequency increases, the power supply circuit of Patent Literature 1 needs to increase the impedance of the choke coil serving as a noise filter, thus sometimes causing an increase in the size of the choke coil and thereby posing an obstacle to downsizing of the power supply circuit.

### Citation List

### Patent Literature

Patent Literature 1: WO 2017/002550 A1

### Summary of Invention

An object of the present disclosure is to provide a step-down converter having the ability to contribute to downsizing while reducing the common mode noise.

A step-down converter according to an aspect of the present disclosure includes a positive electrode input terminal and a negative electrode input terminal, a positive electrode output terminal and a negative electrode output terminal, a first positive-side wiring section, a first negative-side wiring section, a second positive-side wiring section, a second negative-side wiring section, a first capacitor, a second capacitor, a first inductor, a second inductor, a first switching element, a second switching element, a third inductor, a third capacitor, a fourth capacitor, a fourth inductor, a ground conductor member, a fifth capacitor, a sixth capacitor, and a seventh capacitor. The first positive-side wiring section is connected to the positive electrode input terminal. The first negative-side wiring section is connected to the negative electrode input terminal. The second positive-side wiring section is connected to the positive electrode output terminal. The second negative-side wiring section is connected to the negative electrode output terminal. The first capacitor is connected between a first node of the first positive-side wiring section and a second node of the first negative-side wiring section. The second capacitor is connected between a third node of the first positive-side wiring section and a fourth node of the first negative-side wiring section. The first inductor is provided between the first node and the third node. The second inductor is provided between the second node and the fourth node. The first switching element is connected to the first positive-side wiring section. The second switching element is connected between the first switching element and the first negative-side wiring section. The third inductor is connected between a fifth node where the first switching element and the second switching element are connected together and the second positive-side wiring section. The third capacitor is connected to the third inductor in parallel. The fourth capacitor is connected between a sixth node of the second positive-side wiring section and a seventh node of the second negative-side wiring section. The fourth inductor is provided between the first negative-side wiring section and the seventh node. The fifth capacitor is connected between an eighth node of the second positive-side wiring section and the ground conductor member. The eighth node is located between the sixth node of the second positive-side wiring section and the positive electrode output terminal. The sixth capacitor is connected between a ninth node of the second negative-side wiring section and the ground conductor member. The ninth node is located between the seventh node of the second negative-side wiring section and the negative electrode output terminal. The seventh capacitor is connected between the fifth node and the first capacitor.

**Brief Description of Drawings**

FIG. 1 is a schematic circuit diagram of a step-down converter according to a first embodiment;
FIG. 2 is a circuit diagram of the step-down converter;
FIG. 3 is a circuit diagram illustrating an equivalent circuit of the step-down converter on a MHz band;
FIG. 4 is a circuit diagram used to simulate noise generated in the step-down converter;
FIG. 5 is a graph showing the frequency characteristics of noise generated in the step-down converter and noise generated in a step-down converter according to a comparative example;
FIG. 6 is a circuit diagram of a step-down converter according to a first variation of the first embodiment;
FIG. 7 is a schematic circuit diagram of a step-down converter according to a second variation of the first embodiment;
FIG. 8 is a schematic circuit diagram of a step-down converter according to a second embodiment;
FIG. 9 is a circuit diagram illustrating an equivalent circuit of the step-down converter on a MHz band; and
FIG. 10 is a circuit diagram of a step-down converter circuit according to a third embodiment.

**Description of Embodiments**

(First embodiment)

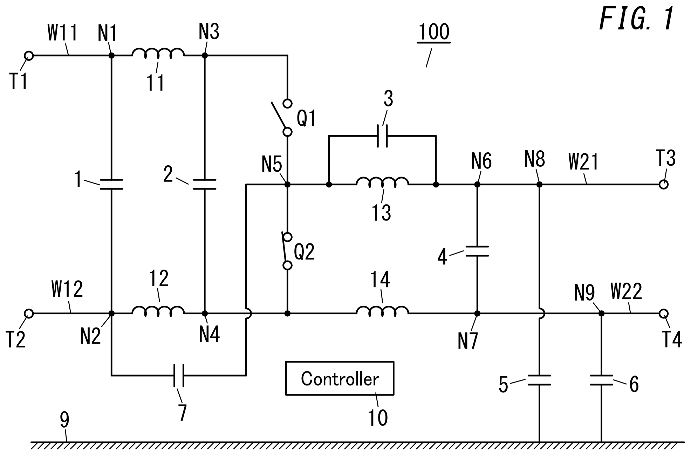

A step-down converter 100 according to a first embodiment will now be described with reference to FIGS. 1-3.

(1) Overview

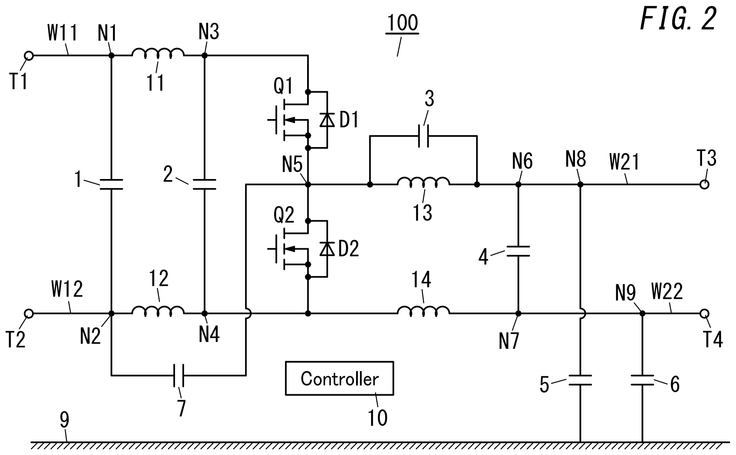

The step-down converter 100 includes a positive electrode input terminal T1 and a negative electrode input terminal T2, and a positive electrode output terminal T3 and a negative electrode output terminal T4 as shown in FIGS. 1 and 2. The step-down converter 100 converts a first voltage input to between the positive electrode input terminal T1 and the negative electrode input terminal T2 into a second voltage smaller than the first voltage and outputs the second voltage to between the positive electrode output terminal T3 and the negative electrode output terminal T4. In the step-down converter 100, a DC power supply, for example, may be connected between the positive electrode input terminal T1 and the negative electrode input terminal T2 and a load, for example, may be connected between the positive electrode output terminal T3 and the negative electrode output terminal T4.

(2) Details

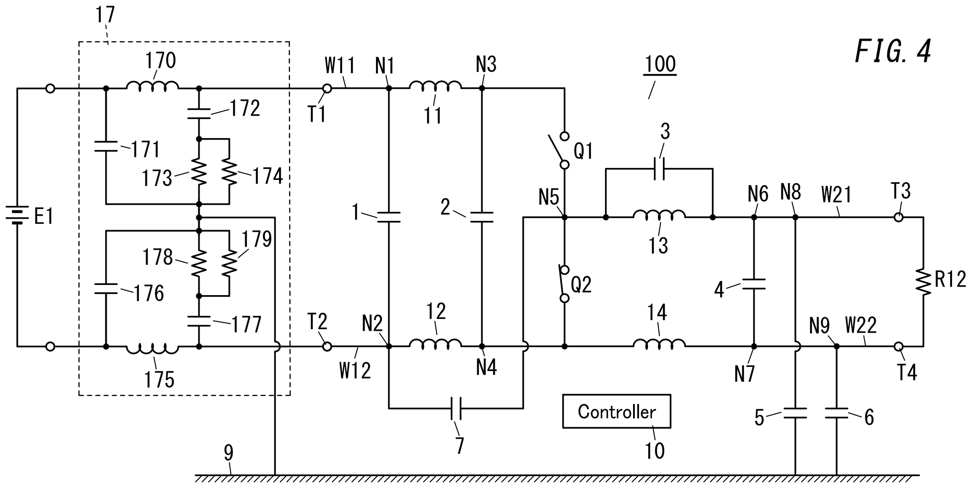

As shown in FIG. 1, the step-down converter 100 includes the positive electrode input terminal T1 and the negative electrode input terminal T2, the positive electrode output terminal T3 and the negative electrode output terminal T4, a first positive-side wiring section W11, a first negative-side wiring section W12, a second positive-side wiring section W21, and a second negative-side wiring section W22. The step-down converter 100 further includes a first capacitor 1, a second capacitor 2, a first inductor 11, a second inductor 12, a first switching element Q1, a second switching element Q2, a third inductor 13, a third capacitor 3, a fourth capacitor 4, and a fourth inductor 14. The step-down converter 100 further includes a ground conductor member 9, a fifth capacitor 5, a sixth capacitor 6, and a seventh capacitor 7. The step-down converter 100 further includes a controller 10.
The positive electrode input terminal T1 may be connected, for example, to a higher potential output terminal (i.e., positive electrode) of a DC power supply E1 (refer to FIG. 4). The DC power supply E1 may include a battery, for example. However, this is only an example and should not be construed as limiting. Alternatively, the DC power supply E1 may also include a DC/DC converter or an AC/DC converter.
The negative electrode input terminal T2 may be connected, for example, to a lower potential output terminal (i.e., negative electrode) of the DC power supply E1 (refer to FIG. 4).
A load R12 (refer to FIG. 4), for example, may be connected between the positive electrode output terminal T3 and the negative electrode output terminal T4. Alternatively, in the step-down converter 100, a DC/AC converter, for example, may be connected, instead of the load R12, between the positive electrode output terminal T3 and the negative electrode output terminal T4.

The first positive-side wiring section W11 is connected to the positive electrode input terminal T1. That is to say, the first positive-side wiring section W11 is a wiring section connected to the positive electrode input terminal T1 in the step-down converter 100. More specifically, the first positive-side wiring section W11 is a wiring section between the positive electrode input terminal T1 and the first switching element Q1. In other words, the first positive-side wiring section W11 is an input positive electrode bus line.

The first negative-side wiring section W12 is connected to the negative electrode input terminal T2. That is to say, the first negative-side wiring section W12 is a wiring section connected to the negative electrode input terminal T2 in the step-down converter 100. The first negative-side wiring section W12 has a first end and a second end. The negative electrode input terminal T2 is connected to the first end of the first negative-side wiring section W12. The second switching element Q2 is connected to the second end of the first negative-side wiring section W12. Thus, a series circuit of the first switching element Q1 and the second switching element Q2 is connected between the first positive-side wiring section W11 and the first negative-side wiring section W12. The first negative-side wiring section W12 is an input negative electrode bus line.

The second positive-side wiring section W21 is connected to the positive electrode output terminal T3. That is to say, the second positive-side wiring section W21 is a wiring section connected to the positive electrode output terminal T3 in the step-down converter 100. The second positive-side wiring section W21 is a wiring section between the fifth node N5 and the positive electrode output terminal T3. The fifth node N5 is a node on the path between the first switching element Q1 and the second switching element Q2. The second positive-side wiring section W21 is an output positive electrode bus line.

The second negative-side wiring section W22 is connected to the negative electrode output terminal T4. That is to say, the second negative-side wiring section W22 is a wiring section connected to the negative electrode output terminal T4 in the step-down converter 100. The second negative-side wiring section W22 has a first end and a second end. The first end of the second negative-side wiring section W22 is connected to the second switching element Q2 and the second end of the first negative-side wiring section W12. The second end of the second negative-side wiring section W22 is connected to the negative electrode output terminal T4. The second negative-side wiring section W22 is an output negative electrode bus line.

The first capacitor 1 is connected between a first node N1 of the first positive-side wiring section W11 and a second node N2 of the first negative-side wiring section W12. In other words, the first capacitor 1 is connected between the positive electrode input terminal T1 and the negative electrode input terminal T2. The first capacitor 1 has a first end and a second end. In the first capacitor 1, the first end of the first capacitor 1 is connected to the first node N1 of the first positive-side wiring section W11 and the second end of the first capacitor 1 is connected to the second node N2 of the first negative-side wiring section W12. The first capacitor 1 has the function of serving as a smoothing capacitor. The first capacitor 1 may be, for example, an electrolytic capacitor. The capacitance of the first capacitor 1 may be, for example, equal to or greater than 200 nF and equal to or less than 500 $\mu$F.

The second capacitor 2 is connected between a third node N3 of the first positive-side wiring section W11 and a fourth node N4 of the first negative-side wiring section W12. In other words, the first capacitor 1 is connected between the positive electrode input terminal T1 and the negative electrode input terminal T2. The second capacitor 2 has the function of serving as a smoothing capacitor. The second capacitor 2 may be, for example, an electrolytic capacitor. The capacitance of the second capacitor 2 may be, for example, equal to or greater than 200 nF and equal to or less than 500 $\mu$F.

The first inductor 11 is provided between the first node N1 and a third node N3. The inductance of the first inductor 11 is smaller than the inductance of the third inductor 13. The inductance of the first inductor 11 may be, for example, equal to or greater than 2 nH and equal to or less than 30 $\mu$H. The first inductor 11 may be configured by, for example, a part of the first positive-side wiring section W11. In other words, the first inductor 11 is configured by, for example, a parasitic inductance component in a part, located between the first node N1 and the third node N3, of the first positive-side wiring section W11. In this case, the inductance of the first inductor 11 may be calculated, for example, by either three-dimensional electromagnetic field analysis or impedance measurement as a parasitic inductance component formed in the part, located between the first node N1 and third node N3, of the first positive-side wiring section W11 on the circuit board.

The second inductor 12 is provided between the second node N2 and the fourth node N4. The inductance of the second inductor 12 is smaller than the inductance of the third inductor 13. The inductance of the second inductor 12 may be, for example, equal to or greater than 2 nH and equal to or less than 30 nH. The second inductor 12 may be configured by, for example, a part of the first negative-side wiring section W12. In other words, the second inductor 12 is configured by, for example, a parasitic inductance component in a part, located between the second node N2 and the fourth node N4, of the first negative-side wiring section W12. In this case, the inductance of the second inductor 12 may be calculated, for example, by either three-dimensional electromagnetic field analysis or impedance measurement as a parasitic inductance component formed in the part, located between the second node N2 and the fourth node N4, of the first negative-side wiring section W12 on the circuit board.

The first switching element Q1 is connected to the first positive-side wiring section W11. The second switching element Q2 is connected between the first switching element Q1 and the first negative-side wiring section W12.

Each of the first switching element Q1 and the second switching element Q2 may be, for example, a normally OFF n-channel metal-oxide semiconductor field effect transistor (MOSFET) as shown in FIG. 2. In FIG. 2, a first diode D1 connected to the first switching element Q1 in antiparallel is a parasitic diode for the n-channel MOSFET serving as the first switching element Q1. However, this is only an example and should not be construed as limiting. Alternatively, the first diode D1 may also be an external diode. Also, a second diode D2 connected to the second switching element Q2 in antiparallel is a parasitic diode for the n-channel MOSFET serving as the second switching element Q2. However, this is only an example and should not be construed as limiting. Alternatively, the second diode D2 may also be an external diode. In the example shown in FIG. 2, each of the first switching element Q1 and the second switching element Q2 includes a first main terminal (drain terminal), a second main terminal (source terminal), and a control terminal (gate terminal). In the example shown in FIG. 2, the first main terminal of the first switching element Q1 is connected to the first positive-side wiring section W11, the second main terminal of the first switching element Q1 is connected to the first main terminal of the second switching element Q2, and the second main terminal of the second switching element Q2 is connected to the first negative-side wiring section W12. In the first diode D1, the anode of the first diode D1 is connected to the second main terminal (source terminal) of the first switching element Q1 and the cathode of the first diode D1 is connected to the first main terminal (drain terminal) of the first switching element Q1. In the second diode D2, the anode of the second diode D2 is connected to the second main terminal (source terminal) of the second switching element Q2 and the cathode of the second diode D2 is connected to the first main terminal (drain terminal) of the second switching element Q2.

In this step-down converter 100, the first switching element Q1 and the second switching element Q2 are controlled by the controller 10. In the step-down converter 100, the first switching element Q1 and the second switching element Q2 are alternately turned ON and OFF. The switching frequency of the first switching element Q1 and the second switching element Q2 may be, for example, equal to or higher than 1 kHz and equal to or lower than 1 MHz.

The third inductor 13 is connected between the fifth node N5 where the first switching element Q1 and the second switching element Q2 are connected together and the second positive-side wiring section W21. The fifth node N5 is provided for the wiring section between the first switching element Q1 and the second switching element Q2. From the viewpoint of circuit configuration, the fifth node N5 is a connection node between the first switching element Q1 and the second switching element Q2. The third inductor 13 may be, for example, a choke coil. The inductance of the third inductor 13 may be, for example, equal to or greater than 200 nH and equal to or less than 30 $\mu$H.

The third capacitor 3 is connected to the third inductor 13 in parallel. The capacitance of the third capacitor 3 is smaller than the capacitance of any of the first capacitor 1, the second capacitor 2, or the fourth capacitor 4. The third capacitor 3 may be implemented as, for example, interwinding capacitance of the third inductor 13. In this case, the capacitance of the third capacitor 3 may be calculated by, for example, either three-dimensional electromagnetic field analysis or impedance measurement as the interwinding capacitance of the third inductor 13 as a choke coil. Thus, the capacitance of the third capacitor 3 may be determined uniquely by the winding wire structure of the third inductor 13 as a choke coil.

The fourth capacitor 4 is connected between a sixth node N6 of the second positive-side wiring section W21 and a seventh node N7 of the second negative-side wiring section W22. In other words, the fourth capacitor 4 is connected between the positive electrode output terminal T3 and the negative electrode output terminal T4. The fourth capacitor 4 has a first end and a second end. In the fourth capacitor 4, the first end of the fourth capacitor 4 is connected to the sixth node N6 of the second positive-side wiring section W21 and the second end of the fourth capacitor 4 is connected to the seventh node N7 of the second negative-side wiring section W22. The fourth capacitor 4 has the function of serving as a smoothing capacitor. The fourth capacitor 4 may be, for example, an electrolytic capacitor. The capacitance of the fourth capacitor 4 may be, for example, equal to or greater than 200 nF and equal to or less than 500 $\mu$F.

The fourth inductor 14 is provided between the first negative-side wiring section W12 and the seventh node N7 of the second negative-side wiring section W22. The inductance of the fourth inductor 14 is smaller than the inductance of the third inductor 13. The inductance of the fourth inductor 14 may be, for example, equal to or greater than 2 nH and equal to or less than 30 nH. The fourth inductor 14 may be configured by, for example, a part of the second negative-side wiring section W22. In other words, the fourth inductor 14 is configured by, for example, a parasitic inductance component in a part, located between the first negative-side wiring section W12 and the seventh node N7, of the second negative-side wiring section W22. In this case, the inductance of the fourth inductor 14 may be calculated, for example, by either three-dimensional electromagnetic field analysis or impedance measurement as a parasitic inductance component formed in the part, located between the first negative-side wiring section W12 and the seventh node N7, of the second negative-side wiring section W22 on the circuit board.

The ground conductor member 9 may be configured, for example, as the housing of the step-down converter 100. The housing houses the circuit module of the step-down converter 100. The circuit module includes a circuit board (e.g., a printed wiring board) and a plurality of circuit components mounted on the circuit board. The plurality of circuit components includes the first capacitor 1, the second capacitor 2, the first switching element Q1, the second switching element Q2, the third inductor 13, and the fourth capacitor 4. The housing has electrical conductivity. A material for the housing may be, for example, a metal or an alloy. The housing has the function of shielding surrounding components from a leakage magnetic field generated by the step-down converter 100. Alternatively, the ground conductor member 9 may be the ground conductor included in the circuit board.

The fifth capacitor 5 is connected between an eighth node N8 of the second positive-side wiring section W21 and the ground conductor member 9. The eighth node N8 is located between the sixth node N6 of the second positive-side wiring section W21 and the positive electrode output terminal T3. The capacitance of the fifth capacitor 5 is smaller than the capacitance of any of the first capacitor 1, the second capacitor 3, or the fourth capacitor 4. Optionally, the fifth capacitor 5 may be parasitic capacitance produced between the second positive-side wiring section W21 and the ground conductor member 9.

The sixth capacitor 6 is connected between a ninth node N9 of the second negative-side wiring section W22 and the ground conductor member 9. The ninth node N9 is located between the seventh node N7 of the second negative-side wiring section W22 and the negative electrode output terminal T4. The capacitance of the sixth capacitor 6 is smaller than the capacitance of any of the first capacitor 1, the second capacitor 2, or the fourth capacitor 4. Optionally, the sixth capacitor 6 may be parasitic capacitance produced between the second negative-side wiring section W22 and the ground conductor member 9.

The seventh capacitor 7 is connected between the fifth node N5 and the first capacitor 1.

The controller 10 controls the first switching element Q1 and the second switching element Q2. The agent that performs the functions of the controller 10 includes a computer system. The computer system includes a single or a plurality of computers. The computer system may include a processor and a memory as principal hardware components thereof. The computer system serves as the agent that performs the functions of the controller 10 according to the present disclosure by making the processor execute a program stored in the memory of the computer system. The program may be stored in advance in the memory of the computer system. Alternatively, the program may also be downloaded through a telecommunications line or be distributed after having been recorded in a non-transitory storage medium such as a memory card, an optical disc, or a hard disk drive (magnetic disk), any of which is readable for the computer system. The processor of the computer system may be made up of a single or a plurality of electronic circuits including a semiconductor integrated circuit (IC) or a large-scale integrated circuit (LSI). Those electronic circuits may be either integrated together on a single chip or distributed on multiple chips, whichever is appropriate. Those multiple chips may be aggregated together in a single device or distributed in multiple devices without limitation.

The controller 10 outputs a first control signal for controlling the ON/OFF states of the first switching element Q1 and a second control signal for controlling the ON/OFF states of the second switching element Q2. Each of the first and second control signals may be, for example, a pulse width modulation (PWM) signal having, for example, a potential level that alternates between a first potential level (hereinafter referred to as a "low level") and a second potential level (hereinafter referred to as a "high level") higher than the first potential level. The first switching element Q1 turns ON when the first control signal has the high level and turns OFF when the first control signal has the low level. The second switching element Q2 turns ON when the second control signal has the high level and turns OFF when the second control signal has the low level. In addition, to prevent the respective ON periods of the first switching element Q1 and the second switching element Q2 from overlapping with each other, the controller 10 sets a dead time period between a high-level period of the first control signal and a high-level period of the second control signal.

In the following description, the circuit constants of the respective constituent elements will be defined as follows:

In this description, the capacitance of the first capacitor 1 will be designated by C1, the capacitance of the second capacitor 2 will be designated by C2, the capacitance of the third capacitor 3 will be designated by C3, the capacitance of the fourth capacitor 4 will be designated by C4, the capacitance of the fifth capacitor 5 will be designated by C5, the capacitance of the sixth capacitor 6 will be designated by C6, and the capacitance of the seventh capacitor 7 will be designated by C7.

Also, in the following description, the inductance of the first inductor 11 will be designated by L1, the inductance of the second inductor 12 will be designated by L2, the inductance of the third inductor 13 will be designated by L3, and the inductance of the fourth inductor 14 will be designated by L4.

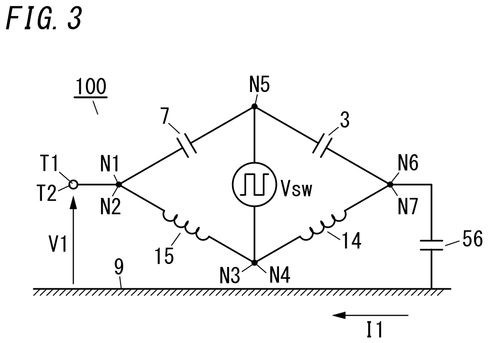

FIG. 3 is a circuit diagram illustrating an equivalent circuit of the step-down converter 100 on the MHz band as shown in FIG. 1. In FIG. 3, the inductor 15 is an inductor having parallel combined inductance ($= (L1 \times L2) / (L1 + L2)$) of the first inductor 11 and the second inductor 12. Also, in FIG. 3, the capacitor 56 is a capacitor having parallel combined capacitance ($= C5 + C6$) of the fifth capacitor 5 and the sixth capacitor 6.

Each of the first capacitor 1, the second capacitor 2, and the fourth capacitor 4 is a smoothing capacitor and has a relatively large capacitance equal to or greater than 200 nF and equal to or less than 500 μF, for example. In the step-down converter 100, the respective impedances of the first capacitor 1, the second capacitor 2, and the fourth capacitor 4 on the MHz band are smaller to a negligible degree than the respective impedances of the first inductor 11, the second inductor 12, and the third capacitor 3 on the MHz band. Thus, in the equivalent circuit of the step-down converter 100 on the MHz band, the first node N1 and the second node N2 may be regarded as being short-circuited with each other, and therefore, may be regarded as the same node. In addition, in the equivalent circuit of the step-down converter 100 on the MHz band, the third node N3 and the fourth node N4 may be regarded as being short-circuited with each other, and therefore, may be regarded as the same node. Furthermore, in the equivalent circuit of the step-down converter 100 on the MHz band, the sixth node N6 and the seventh node N7 may be regarded as being short-circuited with each other, and therefore, may be regarded as the same node.

Furthermore, the third inductor 13 is a choke coil and has an inductance equal to or greater than 200 nH and equal to or less than 30 µH, for example. In the step-down converter 100, the impedance of the third inductor 13 on the MHz band is much larger than the impedance of each of the first inductor 11 and the second inductor 12 on the MHz band. Therefore, in the equivalent circuit of the step-down converter 100 on the MHz band, the part including the third inductor 13 may be regarded as being open.

In the equivalent circuit diagram of the step-down converter 100 on the MHz band, a switching circuit section including the first switching element Q1 and the second switching element Q2 is connected between the fifth node N5, the third node N3, the fourth node N4 as a noise source which generates a voltage Vsw between the fifth node N5 and the third node N3 (or the fourth node N4) due to the operations of the first switching element Q1 and the second switching element Q2.

The common mode noise of the step-down converter 100 on the MHz band derives, if mode conversion outside of the circuit of the step-down converter 100 is ignored, from either the potential V1 (common mode voltage V1) at the first node N1 (or the second node N2) with respect to the ground conductor member 9 or a current I1 (hereinafter also referred to as a "common mode current I1") flowing through the ground conductor member 9.

The equivalent circuit shown in FIG. 3 has the Wheatstone circuit configuration. Thus, if the condition that the ratio of the impedance of the seventh capacitor 7 to the parallel combined impedance of the first inductor 11 and the second inductor 12 be equal to the ratio of the impedance of the third capacitor 3 to the impedance of the fourth inductor 14 is satisfied, then the voltage transfer coefficient (= V1/Vsw) from the switching circuit section to the positive electrode input terminal T1 and the negative electrode input terminal T2 will be zero. That is to say, if the condition expressed by the following equation (1) is satisfied, the voltage transfer coefficient will be ideally equal to zero.

$$\frac{1}{\omega C7} : \frac{\omega L1 \times \omega L2}{\omega L1 + \omega L2} = \frac{1}{\omega C3} : \omega L4 \tag{1}$$

where $\omega$ is an angular frequency.

In the equation (1), the angular frequency $\omega$ may be canceled on both sides. Thus, the equation (1) may be modified into the following equation (2):

$$\frac{1}{C7} : \frac{L1 \times L2}{L1 + L2} = \frac{1}{C3} : L4 \tag{2}$$

The step-down converter 100 may reduce, by designing respective circuit constants (L1, L2 L4, C3 C7) to satisfy the condition defined by the equation (2) (hereinafter referred to as an "impedance balance condition"), the generation of the common mode noise due to the operations of the first switching element Q1 and the second switching element Q2 irrespective of the frequency on the MHz band.

In this case, the equation (2) may be modified into the following equation (3):

$$C7 = C3 \times \left\{ L4 \div \left( \frac{L1 \times L2}{L1 + L2} \right) \right\} \tag{3}$$

Thus, the step-down converter 100 may reduce, by designing respective circuit constants (L1 L2 L4, C3 C7) to satisfy the condition defined by the equation (3), the generation of the common mode noise due to the operations of the first switching element Q1 and the second switching element Q2 irrespective of the frequency on the MHz band.

To reduce the generation of the common mode noise compared to a situation where the seventh capacitor 7 is not provided, the capacitance C7 of the seventh capacitor 7 does not have to have a value satisfying the impedance balance condition but may also have, for example, a value a half to twice as large as the value when the impedance balance condition is satisfied. That is to say, the capacitance C7 of the seventh capacitor 7 may have a value satisfying the following equation (4):

$$0.5 \times C3 \times \left\{L4 \div \left(\frac{L1 \times L2}{L1 + L2}\right)\right\} \leqq C7 \leqq 2 \times C3 \times \left\{L4 \div \left(\frac{L1 \times L2}{L1 + L2}\right)\right\} \quad (4)$$

That is to say, even if the impedance balance condition is not satisfied, the step-down converter 100 may also reduce the common mode noise compared to a configuration including no seventh capacitor 7, as long as the capacitance C7 of the seventh capacitor 7 has a value a half to twice as large as the value when the impedance balance condition is satisfied.

(3) Characteristics

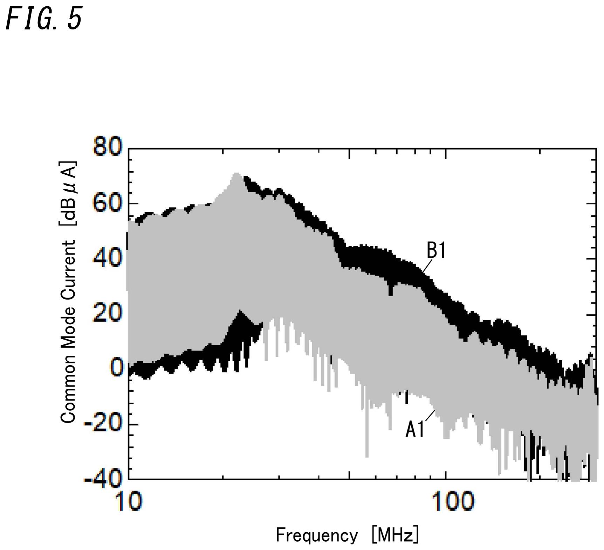

In FIG. 5, the reference sign A1 indicates the frequency characteristics of a common mode current I1 (refer to FIG. 3) generated when a first example of the step-down converter 100 according to the first embodiment is allowed to operate with the DC power supply E1 and the load R12 connected thereto as shown in FIG. 4. The common mode current I1 includes a current flowing from the fifth node N5 to the ground conductor member 9 via the sixth node N6 and the fifth capacitor 5 and a current flowing from the fifth node N5 to the ground conductor member 9 via the seventh node N7 and the sixth capacitor 6.
In the circuit shown in FIG. 4, the DC power supply E1 is connected between the positive electrode input terminal T1 and the negative electrode input terminal T2 of the step-down converter 100 via a pseudo power supply circuit network 17. In the example illustrated in FIG. 4, the pseudo power supply circuit network 17 is a circuit network for stabilizing the power supply impedance when the DC power supply E1 is viewed from the step-down converter 100. In the example illustrated in FIG. 4, the pseudo power supply circuit network 17 includes two inductors 170, 175, four capacitors 171, 172, 176, 177, and four resistors 173, 174, 178, 179. Also, in the example illustrated in FIG. 4, the load R12 is a load resistor.
The frequency characteristics of the common mode current I1 as indicated by the reference sign A1 in FIG. 5 were obtained by calculating the common mode current I1 flowing through the ground conductor member 9 by a transient analysis using a simulation model of the circuit shown in FIG. 4 and subjecting the common mode current I1 to a fast Fourier transform. On the other hand, the reference sign B1 shown in FIG. 5 indicates the frequency characteristics of a common mode current in a step-down converter according to a comparative example. The step-down converter according to the comparative example does not include the seventh capacitor 7 of the step-down converter 100 according to the first embodiment.
As for the first example described above, the circuit constants of the respective constituent elements thereof were set at the values shown in the following Table 1 such that the impedance balance condition would be satisfied. Also, as for each of the first capacitor 1, the second capacitor 2, the fourth capacitor 4, the fifth capacitor 5, and the sixth capacitor 6, the equivalent series resistance (ESR) and equivalent series inductance (ESL) thereof were taken into account.

[Table 1]

| Constituent Element | Circuit Constant |
| --- | --- |
| First Capacitor 1 | C1 = 470 μF |
| Second Capacitor 2 | C3 = 470 μF |
| Fourth Capacitor 4 | C4 = 470 μF |
| ESR of First Capacitor 1 | 10 mΩ |
| ESR of Second Capacitor 2 | 10 mΩ |
| ESR of Fourth Capacitor 4 | 10 mΩ |
| ESL of First Capacitor 1 | 10 nH |
| ESL of Second Capacitor 2 | 10 nH |
| ESL of Fourth Capacitor 4 | 10 nH |
| First Inductor 11 | L1 = 10 nH |
| Second Inductor 12 | L2 = 10 nH |
| Fourth Inductor 14 | L4 = 10 nH |

(continued)

| Constituent Element | Circuit Constant |
|---|---|
| Third Inductor 13 | L3 = 10 $\mu$H |
| Third Capacitor 3 | C3 = 2nF |
| Fifth Capacitor 5 | C5 = 10 nF |
| Sixth Capacitor 6 | C6 = 10 nF |
| ESR of Fifth Capacitor 5 | 100 m$\Omega$ |
| ESR of Sixth Capacitor 6 | 100 m$\Omega$ |
| ESL of Fifth Capacitor 5 | 5 nH |
| ESL of Sixth Capacitor 6 | 5 nH |
| Seventh Capacitor 7 | C7= 4nF |
| Load (Load Resistor) R12 | 1 $\Omega$ |
| Inductors 170, 175 | 50 $\mu$H |
| Capacitors 171, 176 | 1 $\mu$F |
| Capacitors 172, 177 | 100 nF |
| Resistors 173, 178 | 1 k$\Omega$ |
| Resistors 174, 179 | 50 $\Omega$ |

Also, the frequency characteristics of the common mode current I1 according to the first example as indicated by the reference sign A1 in FIG. 5 were obtained when the output voltage of the DC power supply E1 was set at 24 V, the switching frequency of each of the first switching element Q1 and the second switching element Q2 was set at 100 kHz, and the output power of the step-down converter 100 was set at 144 W. The frequency characteristics of the common mode current according to the comparative example as indicated by the reference sign B1 shown in FIG. 5 were obtained under the same condition as in the first example.

As can be seen from FIG. 5, the common mode current may be reduced according to the first example by a few ten dB$\mu$A on a frequency band equal to or higher than 20 MHz compared to the comparative example.

These results were obtained for the first example described above by making simulations using circuit constants that had been designed to satisfy the impedance balance condition. Actually, however, the circuit constants will vary from one constituent element to another. Thus, simulations were carried out with all circuit constants but the capacitance C7 of the seventh capacitor 7 set at the same values as the ones shown in Table 1 and with the capacitance C7 of the seventh capacitor 7 varied. The results of those simulations are summarized in the following Table 2. According to the first example, the impedance balance condition is satisfied only when the capacitance C7 of the seventh capacitor 7 is 4 nF. Note that the value of the common mode current in Table 2 is the value of the common mode current at 50 MHz.

[Table 2]

| | Capacitance C7 | Common Mode Current |
|---|---|---|
| Comparative Example | - | 44.3 dB$\mu$A |
| Example 2 | 2 nF | 43.4 dB$\mu$A |
| Example 3 | 3 nF | 40.3 dB$\mu$A |
| Example 1 | 4 nF | 34.1 dB$\mu$A |
| Example 4 | 5 nF | 34.3 dB$\mu$A |
| Example 5 | 6 nF | 37.7 dB$\mu$A |
| Example 6 | 7 nF | 39.7 dB$\mu$A |
| Example 7 | 8 nF | 41.1 dB$\mu$A |

As can be seen from Table 2, if the capacitance C7 of the seventh capacitor 7 satisfies the impedance balance condition (i.e., when C7 = 4 nF), the common mode current becomes minimum. In addition, it can also be seen that even if the capacitance C7 of the seventh capacitor 7 does not satisfy the impedance balance condition but has a value a half to twice as large as the value when the impedance balance condition is satisfied, the common mode current may be reduced compared to the comparative example.

(4) Advantages

A step-down converter 100 according to the first embodiment includes a first capacitor 1, second capacitor 2, a first inductor 11, a second inductor 12, a third capacitor 3, a fourth inductor 14, a fifth capacitor 5, a sixth capacitor 6, and a seventh capacitor 7. The seventh capacitor 7 is connected between the fifth node N5 and the first capacitor 1. This allows the step-down converter 100 according to the first embodiment to contribute to downsizing while reducing common mode noise. More specifically, the step-down converter 100 according to the first embodiment includes the first inductor 11, the second inductor 12, the third capacitor 3, the fourth inductor 14, and the seventh capacitor 7, and therefore, the equivalent circuit on the MHz band will be a circuit having a Wheatstone bridge circuit configuration. This allows the step-down converter 100 according to the first embodiment to reduce the common mode noise without using any common mode choke coil, thus contributing to downsizing while reducing the common mode noise.

In addition, the step-down converter 100 according to the first embodiment may further reduce the common mode noise if the capacitance C7 of the seventh capacitor 7 has a value satisfying the equation (3).

Furthermore, the step-down converter 100 according to the first embodiment may use, if the capacitance C7 of the seventh capacitor 7 has a value satisfying the equation (4), a capacitor having a larger tolerance in capacitance C7 as the seventh capacitor 7, thus cutting down the cost of the seventh capacitor 7 and eventually reducing the overall cost of the step-down converter 100.

(5) Variations of first embodiment

(5.1) First variation

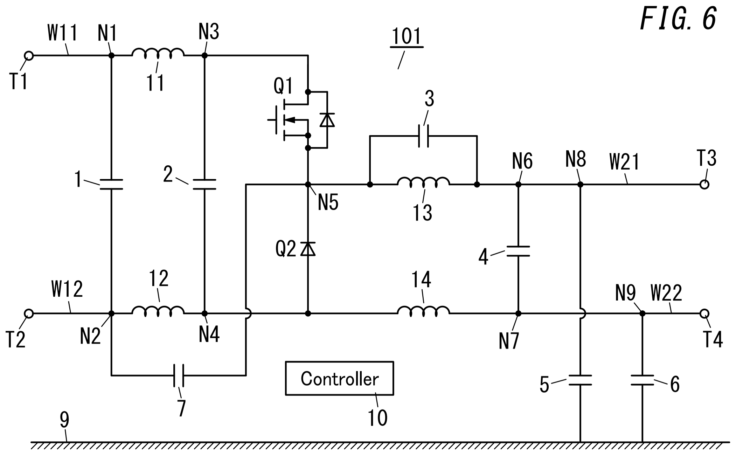

A step-down converter 101 according to a first variation of the first embodiment will be described with reference to FIG. 6. In the following description, any constituent element of the step-down converter 101 according to the first variation, having the same function as a counterpart of the step-down converter 100 (refer to FIGS. 1 and 2) according to the first embodiment described above, will be designated by the same reference numeral as that counterpart's, and description thereof will be omitted herein.

In the step-down converter 101 according to the first variation, the second switching element Q2 is implemented as a diode, which is a difference from the step-down converter 100 according to the first embodiment. In the diode serving as the second switching element Q2, the anode of the diode is connected to the first negative-side wiring section W12 and the cathode of the diode is connected to the first switching element Q1. In the step-down converter 101 according to the first variation, the controller 10 controls the ON/OFF states of the first switching element Q1.

The step-down converter 101 according to the first variation, as well as the step-down converter 100 according to the first embodiment, includes the seventh capacitor 7, and therefore, may contribute to downsizing while reducing the common mode noise.

(5.2) Second variation

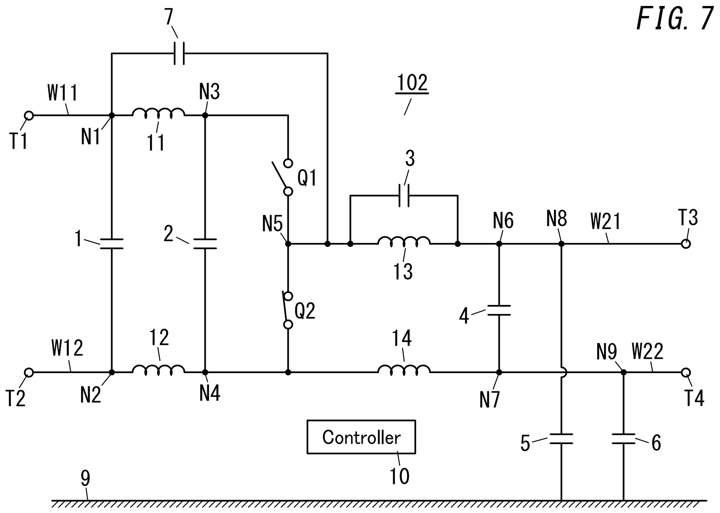

A step-down converter 102 according to a second variation of the first embodiment will be described with reference to FIG. 7. In the following description, any constituent element of the step-down converter 102 according to the second variation, having the same function as a counterpart of the step-down converter 100 (refer to FIGS. 1 and 2) according to the first embodiment described above, will be designated by the same reference numeral as that counterpart's, and description thereof will be omitted herein.

In the step-down converter 102 according to the second variation, the seventh capacitor 7 is not connected between the second node N2 and the fifth node N5 but connected between the first node N1 and the fifth node N5, which is a difference from the step-down converter 100 according to the first embodiment described above.

In the step-down converter 102 according to the second variation, as well as in the step-down converter 100 according to the first embodiment described above, the first node N1 and the second node N2 may be regarded as the same node on the MHz band. Thus, the equivalent circuit of the step-down converter 102 on the MHz band according to the second variation is the same as the one shown in FIG. 3. Consequently, the step-down converter 102 according to the second variation, as well as the step-down converter 100 according to the first embodiment, includes the seventh capacitor 7, and therefore, may contribute to downsizing while reducing the common mode noise.

In addition, in the step-down converter 100 according to the first embodiment, the wiring section between the fifth node N5 and the seventh capacitor 7 intersects with the first negative-side wiring section W12 when viewed in plan in a thickness direction defined with respect to the circuit board. Thus, a configuration in which a multilayer printed wiring board is adopted as the circuit board and a part of the wiring section between the fifth node N5 and the seventh capacitor 7 is extended, through a via conductor, for example, to a different layer of the circuit board from the layer including the first negative-side wiring section W12 is sometimes adopted. In contrast, in the step-down converter 102 according to the second variation, the wiring section between the fifth node N5 and the seventh capacitor 7 does not intersect with any other wiring section (including the first positive-side wiring section W11 and the first negative-side wiring section W12), thus reducing the chances of generating unnecessary parasitic inductance components in the wiring section between the fifth node N5 and the seventh capacitor 7. In addition, the step-down converter 102 according to the second variation allows the wiring section between the fifth node N5 and the seventh capacitor 7, the first positive-side wiring section W11, and the first negative-side wiring section W12 to be laid out on the same layer, thus increasing the degree of freedom of wiring design of the circuit board.

(5.3) Third variation

A step-down converter 100 according to a third variation of the first embodiment has the same circuit configuration as the step-down converter 100 (refer to FIGS. 1 and 2) according to the first embodiment described above, and therefore, illustration thereof is omitted.

In the step-down converter 100 according to the third variation, each of the first inductor 11, the second inductor 12, and the fourth inductor 14 is implemented as a chip inductor, and each of the third capacitor 3 and the seventh capacitor 7 is implemented as a chip capacitor, which is a difference from the step-down converter 100 according to the first embodiment. Each of the inductance L1 of the first inductor 11, the inductance L2 of the second inductor 12, and the inductance L4 of the fourth inductor 14 may be, for example, equal to or greater than 2 nH and equal to or less than 30 nH. Each of the capacitance C3 of the third capacitor 3 and the capacitance C7 of the seventh capacitor 7 may be equal to or greater than 2 nF and equal to or less than 30 nF.

The step-down converter 100 according to the third variation makes it easier to calculate the impedance between the first node N1 and the third node N3, the impedance between the second node N2 and the fourth node N4, the impedance between the fourth node N4 and the seventh node N7, the impedance between the fifth node N5 and the sixth node N6, and the impedance between the second node N2 and the fifth node N5, thus making it easier to design the step-down converter 100 that satisfies the impedance balance condition.

(Second embodiment)

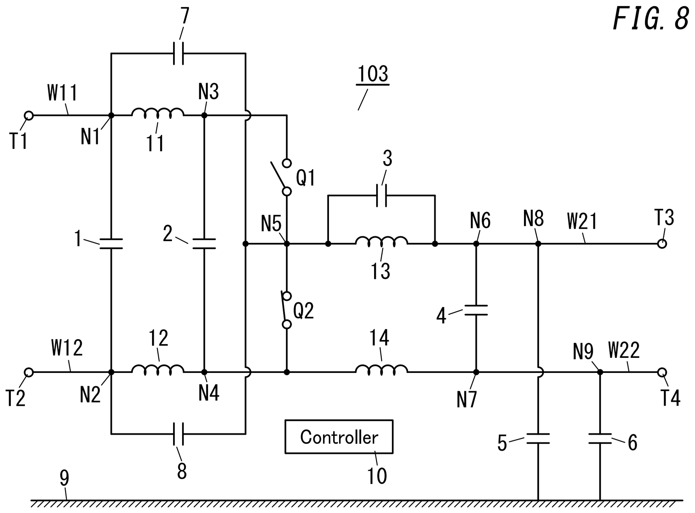

A step-down converter 103 according to a second embodiment will be described with reference to FIG. 8. In the following description, any constituent element of the step-down converter 103 according to the second embodiment, having the same function as a counterpart of the step-down converter 102 (refer to FIG. 7) according to the second variation of the first embodiment described above, will be designated by the same reference numeral as that counterpart's, and description thereof will be omitted herein.

(1) Configuration

The step-down converter 103 according to the second embodiment further includes an eighth capacitor 8 connected between the fifth node N5 and the second node N2, which is a difference from the step-down converter 102 according to the second variation of the first embodiment. Thus, the step-down converter 103 according to the second embodiment includes the seventh capacitor 7 connected to the first end of the first capacitor 1 via the first node N1 and the eighth capacitor 8 connected to the second end of the first capacitor 1 via the second node N2.

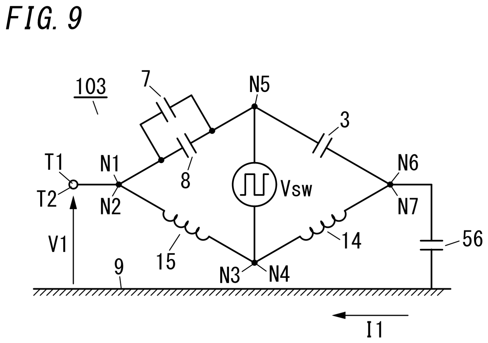

FIG. 9 is a circuit diagram illustrating an equivalent circuit of the step-down converter 103 on the MHz band as shown in FIG. 8. In FIG. 9, the inductor 15 is an inductor having parallel combined inductance (= (L1 × L2) / (L1 + L2)) of the first inductor 11 and the second inductor 12. Also, in FIG. 9, the capacitor 56 is a capacitor having parallel combined capacitance (= C5 + C6) of the fifth capacitor 5 and the sixth capacitor 6.

The equivalent circuit of the step-down converter 103 on the MHz band according to the second embodiment has the Wheatstone bridge circuit configuration as in the first embodiment described above. The impedance balance condition according to the second embodiment is expressed by the following equation (5):

$$\frac{1}{C7 + C8} : \frac{L1 \times L2}{L1 + L2} = \frac{1}{C3} : L4 \qquad (5)$$

where C8 is the capacitance of the eighth capacitor 8.

The step-down converter 103 may reduce, by designing respective circuit constants (L1, L2, L4, C3, C7, C8) to satisfy the impedance balance condition defined by the equation (5), the generation of the common mode noise due to the operations of the first switching element Q1 and the second switching element Q2 irrespective of the frequency on the MHz band.

In this case, the equation (5) may be modified into the following equation (6):

$$C7 + C8 = C3 \times \left\{ L4 \div \left( \frac{L1 \times L2}{L1 + L2} \right) \right\} \tag{6}$$

Thus, the step-down converter 103 may further reduce, by designing respective circuit constants (L1, L2, L4, C3, C7, C8) to satisfy the condition defined by the equation (6), the generation of the common mode noise due to the operations of the first switching element Q1 and the second switching element Q2 irrespective of the frequency on the MHz band.

To reduce the generation of the common mode noise compared to a situation where neither the seventh capacitor 7 nor the eighth capacitor 8 is provided, the combined capacitance (C7 + C8) of the seventh capacitor 7 and the eighth capacitor 8 does not have to have a value satisfying the impedance balance condition but may also have a value a half to twice as large as the value when the impedance balance condition is satisfied. That is to say, (C7 + C8) may have a value satisfying the following equation (7):

$$0.5 \times C3 \times \left\{ L4 \div \left( \frac{L1 \times L2}{L1 + L2} \right) \right\} \leqq (C7 + C8) \leqq 2 \times C3 \times \left\{ L4 \div \left( \frac{L1 \times L2}{L1 + L2} \right) \right\} \tag{7}$$

That is to say, even if the impedance balance condition is not satisfied, the step-down converter 103 may also reduce the common mode noise compared to a configuration including no seventh capacitor 7 or eighth capacitor 8, as long as (C7 + C8) has a value a half to twice as large as the value when the impedance balance condition is satisfied.

(2) Advantages

A step-down converter 103 according to the second embodiment includes a first capacitor 1, second capacitor 2, a first inductor 11, a second inductor 12, a third capacitor 3, a fourth inductor 14, a fifth capacitor 5, a sixth capacitor 6, a seventh capacitor 7 and an eighth capacitor 8. The seventh capacitor 7 is connected between the fifth node N5 and the first node N1. The eighth capacitor 8 is connected between the fifth node N5 and the second node N2. This allows the step-down converter 103 according to the second embodiment to contribute to downsizing while reducing common mode noise. More specifically, the step-down converter 103 according to the third embodiment includes the first inductor 11, the second inductor 12, the third capacitor, the fourth inductor 14, the seventh capacitor 7, and the eighth capacitor 8, and therefore, the equivalent circuit thereof on the MHz band will be a circuit having a Wheatstone bridge circuit configuration. This allows the step-down converter 103 according to the second embodiment to reduce the common mode noise without using any common mode choke coil, thus contributing to downsizing while reducing the common mode noise.

In addition, the step-down converter 103 according to the second embodiment includes the eighth capacitor 8, thus allowing each of the seventh capacitor 7 and the eighth capacitor 8 to have capacitance smaller than the capacitance of the seventh capacitor 7 in the step-down converter 100 according to the first embodiment. This allows the step-down converter 103 according to the second embodiment to reduce the capacitance components in a first current loop when the first switching element Q1 is in ON state and the capacitance components in a second current loop when the second switching element Q2 is in ON state, thus reducing the generation of ringing due to LC resonance. The first current loop is a current loop including the first switching element Q1, the seventh capacitor 7, and the first inductor 11. The second current loop is a current loop including the second switching element Q2, the eighth capacitor 8, and the second inductor 12.

In addition, the step-down converter 103 according to the second embodiment may further reduce the common mode noise if (C7 + C8) has a value satisfying the equation (6) described above.

Furthermore, the step-down converter 103 according to the second embodiment may use, if (C7 + C8) has a value satisfying the equation (7), a capacitor having a larger tolerance in capacitance as each of the seventh capacitor 7 and the eighth capacitor 8, thus cutting down the cost of the seventh capacitor 7 and the eighth capacitor 8 and eventually reducing the overall cost of the step-down converter 103.

(Third embodiment)

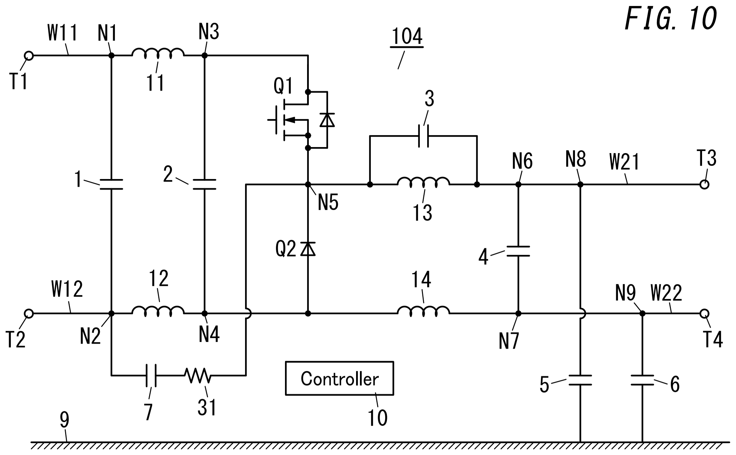

A step-down converter 104 according to a third embodiment will be described with reference to FIG. 10. In the following description, any constituent element of the step-down converter 104 according to the third embodiment, having the same function as a counterpart of the step-down converter 101 (refer to FIG. 6) according to the first variation of the first embodiment described above, will be designated by the same reference numeral as that counterpart's, and description thereof will be omitted herein.

(1) Configuration

The step-down converter 104 according to the third embodiment further includes a resistor 31 connected to the seventh capacitor 7 in series between the fifth node N5 and the second node N2, which is a difference from the step-down converter 101 according to the first variation of the first embodiment. In the step-down converter 104, the resistor 31 is connected between the seventh capacitor 7 and the fifth node N5.

In the step-down converter 104, the impedance of the resistor 31 on the MHz band is sufficiently smaller than the impedance of the seventh capacitor 7 on the MHz band. As used herein, the expression "the impedance of the resistor 31 on the MHz band is sufficiently smaller than the impedance of the seventh capacitor 7 on the MHz band" means that as for the impedance on the MHz band, the impedance of the resistor 31 is preferably equal to or less than one-tenth, and more preferably equal to or less than one-hundredth, of the impedance of the seventh capacitor 7. In the step-down converter 104, the circuit constant of the resistor 31 is set to make the impedance of the resistor 31 on the MHz band sufficiently smaller than the impedance of the seventh capacitor 7 on the MHz band. The resistor 31 has a characteristic that its impedance is constant irrespective of the frequency. The seventh capacitor 7 has a characteristic that its impedance decreases as the frequency increases.

In the step-down converter 104 according to the third embodiment, the impedance of the resistor 31 on the MHz band is sufficiently smaller than the impedance of the seventh capacitor 7 on the MHz band. Thus, in the equivalent circuit of the step-down converter 104 on the MHz band, the resistor 31 may be ignored. Accordingly, the equivalent circuit of the step-down converter 104 on the MHz band is the same as the equivalent circuit of the step-down converter 100 on the MHz band according to the first embodiment. Consequently, the impedance balance condition according to the third embodiment is the same as the impedance balance condition according to the first embodiment and is the same as the one expressed by the equation (2). Note that in the step-down converter 104, the second switching element Q2 is implemented as a diode. Alternatively, the second switching element Q2 may also be implemented as an n-channel MOSFET as in the step-down converter 100 according to the first embodiment.

(2) Advantages

The step-down converter 104 according to the third embodiment, as well as the step-down converter 100 according to the first embodiment, includes the seventh capacitor 7, thus contributing to downsizing while reducing the common mode noise.

In addition, the step-down converter 104 according to the third embodiment further includes a resistor 31 connected to the seventh capacitor 7 in series between the fifth node N5 and the second node N2. Thus, the resistor 31 is also included in the current loop including the second switching element Q2, the seventh capacitor 7, and the second inductor 12.

This configuration may reduce not only the resonance in the current loop but also ringing when the second switching element Q2 makes a transition from the OFF state to the ON state, thus allowing for further reducing the common mode noise.

(Other variations)

Note that the first to third embodiments and their variations described above are only exemplary ones of various embodiments of the present disclosure and their variations and should not be construed as limiting. Rather, the first to third embodiments and their variations may be readily modified in various manners depending on a design choice or any other factor without departing from the scope of the present disclosure.

Each of the first switching element Q1 and second switching element Q2 in the step-down converter 100 according to the first embodiment does not have to be an n-channel MOSFET but may also be a p-channel MOSFET. Also, in the first embodiment described above, each of the first switching element Q1 and the second switching element Q2 is an Si-based MOSFET. However, this is only an example and should not be construed as limiting. Alternatively, each of the first switching element Q1 and the second switching element Q2 may also be, for example, an SiC-based MOSFET. Still alternatively, each of the first switching element Q1 and the second switching element Q2 may also be, for example, a bipolar transistor, an insulated gate bipolar transistor (IGBT) or a GaN-based gate injection transistor (GIT).

Optionally, the resistor 31 described for the third embodiment may also be provided for each of the second variation of the first embodiment, the third variation of the first embodiment, and the second embodiment.

(Aspects)

The foregoing description provides specific implementations for the following aspects of the present disclosure.

A step-down converter (100; 101; 102; 103; 104) according to a first aspect includes a positive electrode input terminal (T1) and a negative electrode input terminal (T2), a positive electrode output terminal (T3) and a negative electrode output terminal (T4), a first positive-side wiring section (W11), a first negative-side wiring section (W12), a second positive-side wiring section (W21), a second negative-side wiring section (W22), a first capacitor (1), a second capacitor (2), a first inductor (11), a second inductor (12), a first switching element (Q1), a second switching element (Q2), a third inductor (13), a third capacitor (3), a fourth capacitor (4), a fourth inductor (14), a ground conductor member (9), a fifth capacitor (5), a sixth capacitor (6), and a seventh capacitor (7). The first positive-side wiring section (W11) is connected to the positive electrode input terminal (T1). The first negative-side wiring section (W12) is connected to the negative electrode input terminal (T2). The second positive-side wiring section (W21) is connected to the positive electrode output terminal (T3). The second negative-side wiring section (W22) is connected to the negative electrode output terminal (T4). The first capacitor (1) is connected between a first node (N1) of the first positive-side wiring section (W11) and a second node (N2) of the first negative-side wiring section (W12). The second capacitor (2) is connected between a third node (N3) of the first positive-side wiring section (W11) and a fourth node (N4) of the first negative-side wiring section (W12). The first inductor (11) is provided between the first node (N1) and the third node (N3). The second inductor (12) is provided between the second node (N2) and the fourth node (N4). The first switching element (Q1) is connected to the first positive-side wiring section (W11). The second switching element (Q2) is connected between the first switching element (Q1) and the first negative-side wiring section (W12). The third inductor (13) is connected between a fifth node (N5) where the first switching element (Q1) and the second switching element (Q2) are connected together and the second positive-side wiring section (W21). The third capacitor (3) is connected to the third inductor (13) in parallel. The fourth capacitor (4) is connected between a sixth node (N6) of the second positive-side wiring section (W21) and a seventh node (N7) of the second negative-side wiring section (W22). The fourth inductor (14) is provided between the first negative-side wiring section (W12) and the seventh node (N7). The fifth capacitor (5) is connected between an eighth node (N8) of the second positive-side wiring section (W21) and the ground conductor member (9). The eighth node (N8) is located between the sixth node (N6) of the second positive-side wiring section (W21) and the positive electrode output terminal (T3). The sixth capacitor (6) is connected between a ninth node (N9) of the second negative-side wiring section (W22) and the ground conductor member (9). The ninth node (N9) is located between the seventh node (N7) of the second negative-side wiring section (W22) and the negative electrode output terminal (T4). The seventh capacitor (7) is connected between the fifth node (N5) and the first capacitor (1).

This aspect may contribute to downsizing while reducing common mode noise.

In a step-down converter (100; 101; 102; 103) according to a second aspect, which may be implemented in conjunction with the first aspect, the seventh capacitor (7) is connected between the fifth node (N5) and the first node (N1).

This aspect may reduce the chances of producing unnecessary parasitic inductance components between the fifth node (N5) and the seventh capacitor (7).

A step-down converter (100; 101; 102; 104) according to a third aspect, which may be implemented in conjunction with the first or second aspect, satisfies

$$C7 = C3 \times \left\{ L4 \div \left( \frac{L1 \times L2}{L1 + L2} \right) \right\}$$

where C3 is capacitance of the third capacitor (3), L1 is inductance of the first inductor (11), L2 is inductance of the second inductor (12), L4 is inductance of the fourth inductor (14), and C7 is capacitance of the seventh capacitor (7).

This aspect allows the common mode noise to be further reduced.

A step-down converter (100; 101; 102; 104) according to a fourth aspect, which may be implemented in conjunction with the first or second aspect, satisfies

$$0.5 \times C3 \times \left\{ L4 \div \left( \frac{L1 \times L2}{L1 + L2} \right) \right\} \leqq C7 \leqq 2 \times C3 \times \left\{ L4 \div \left( \frac{L1 \times L2}{L1 + L2} \right) \right\}$$

where C3 is capacitance of the third capacitor (3), L1 is inductance of the first inductor (11), L2 is inductance of the second inductor (12), L4 is inductance of the fourth inductor (14), and C7 is capacitance of the seventh capacitor (7).

This aspect allows a capacitor with a larger tolerance in capacitance to be used as the seventh capacitor (7), thus cutting down the cost of the seventh capacitor (7) and eventually reducing the overall cost of the step-down converter (100; 101; 102; 104).

A step-down converter (103) according to a fifth aspect, which may be implemented in conjunction with the second aspect, further includes an eighth capacitor (8) connected between the fifth node (N5) and the second node (N2).

This aspect allows capacitance components produced in a first current loop when the first switching element (Q1) is ON and capacitance components produced in a second current loop when the second switching element (Q2) is ON to be reduced, thereby reducing the occurrence of ringing due to LC resonance.

A step-down converter (103) according to a sixth aspect, which may be implemented in conjunction with the fifth aspect, satisfies

$$C7 + C8 = C3 \times \left\{ L4 \div \left( \frac{L1 \times L2}{L1 + L2} \right) \right\}$$

where C3 is capacitance of the third capacitor (3), L1 is inductance of the first inductor (11), L2 is inductance of the second inductor (12), L4 is inductance of the fourth inductor (14), C7 is capacitance of the seventh capacitor (7), and C8 is capacitance of the eighth capacitor (8).

This aspect allows the common mode noise to be further reduced.

A step-down converter (103) according to a seventh aspect, which may be implemented in conjunction with the fifth aspect, satisfies

$$0.5 \times C3 \times \left\{ L4 \div \left( \frac{L1 \times L2}{L1 + L2} \right) \right\} \leqq (C7 + C8) \leqq 2 \times C3 \times \left\{ L4 \div \left( \frac{L1 \times L2}{L1 + L2} \right) \right\}$$

where C3 is capacitance of the third capacitor (3), L1 is inductance of the first inductor (11), L2 is inductance of the second inductor (12), L4 is inductance of the fourth inductor (14), C7 is capacitance of the seventh capacitor (7), and C8 is capacitance of the eighth capacitor (8).

This aspect allows a capacitor with a larger tolerance in capacitance to be used as each of the seventh capacitor (7) and the eighth capacitor (8), thus cutting down the cost of the seventh capacitor (7) and the eighth capacitor (8) and eventually reducing the overall cost of the step-down converter (103).

In a step-down converter (100; 101; 102; 103; 104) according to an eighth aspect, which may be implemented in conjunction with any one of the first to seventh aspects, the first inductor (11) is configured by a part of the first positive-side wiring section (W11), the second inductor (12) is configured by a part of the first negative-side wiring section (W12), and the fourth inductor (14) is configured by a part of the second negative-side wiring section (W22).

This aspect allows the number of components required to be reduced, thus contributing to downsizing and cost reduction.

In a step-down converter (100; 101; 102; 103; 104) according to a ninth aspect, which may be implemented in conjunction with any one of the first to eighth aspects, the third inductor (13) is a choke coil, and the third capacitor (3) is interwinding capacitance of the choke coil.

This aspect allows the number of components required to be reduced, thus contributing to downsizing and cost reduction.

A step-down converter (100; 101; 102; 103; 104) according to a tenth aspect, which may be implemented in conjunction with any one of the first to ninth aspects, further includes a resistor (31) connected to the seventh capacitor (7) in series between the fifth node (N5) and the second node (N2).

This aspect allows the common mode noise to be further reduced.

**Reference Signs List**

| | |
|---|---|
| 1 | First Capacitor |
| 2 | Second Capacitor |

| | |
|---|---|
| 3 | Third Capacitor |
| 4 | Fourth Capacitor |
| 5 | Fifth Capacitor |
| 6 | Sixth Capacitor |
| 7 | Seventh Capacitor |
| 8 | Eighth Capacitor |
| 9 | Ground Conductor Member |
| 10 | Controller |
| 11 | First Inductor |
| 12 | Second Inductor |
| 13 | Third Inductor |
| 14 | Fourth Inductor |
| 31 | Resistor |
| 100, 101, 102, 103, 104 | Step-Down Converter |
| Q1 | First Switching Element |
| Q2 | Second Switching Element |
| T1 | Positive Electrode Input Terminal |
| T2 | Negative Electrode Input Terminal |
| T3 | Positive Electrode Output Terminal |
| T4 | Negative Electrode Output Terminal |
| W11 | First Positive-Side Wiring Section |
| W12 | First Negative-Side Wiring Section |
| W21 | Second Positive-Side Wiring Section |
| W22 | Second Negative-Side Wiring Section |

**Claims**

1. A step-down converter comprising:

a positive electrode input terminal and a negative electrode input terminal;

a positive electrode output terminal and a negative electrode output terminal;

a first positive-side wiring section connected to the positive electrode input terminal;

a first negative-side wiring section connected to the negative electrode input terminal;

a second positive-side wiring section connected to the positive electrode output terminal;

a second negative-side wiring section connected to the negative electrode output terminal;

a first capacitor connected between a first node of the first positive-side wiring section and a second node of the first negative-side wiring section;

a second capacitor connected between a third node of the first positive-side wiring section and a fourth node of the first negative-side wiring section;

a first inductor provided between the first node and the third node;

a second inductor provided between the second node and the fourth node;

a first switching element connected to the first positive-side wiring section;

a second switching element connected between the first switching element and the first negative-side wiring section;

a third inductor connected between a fifth node where the first switching element and the second switching element are connected together and the second positive-side wiring section;

a third capacitor connected to the third inductor in parallel;

a fourth capacitor connected between a sixth node of the second positive-side wiring section and a seventh node of the second negative-side wiring section;

a fourth inductor provided between the first negative-side wiring section and the seventh node,

a ground conductor member;

a fifth capacitor connected between an eighth node of the second positive-side wiring section and the ground conductor member, the eighth node being located between the sixth node of the second positive-side wiring section and the positive electrode output terminal;

a sixth capacitor connected between a ninth node of the second negative-side wiring section and the ground conductor member, the ninth node being located between the seventh node of the second negative-side wiring section and the negative electrode output terminal; and

a seventh capacitor connected between the fifth node and the first capacitor.

2. The step-down converter of claim 1, wherein
the seventh capacitor is connected between the fifth node and the first node.

3. The step-down converter of claim 1 or 2, wherein
the step-down converter satisfies

$$C7 = C3 \times \left\{ L4 \div \left( \frac{L1 \times L2}{L1 + L2} \right) \right\}$$

where C3 is capacitance of the third capacitor, L1 is inductance of the first inductor, L2 is inductance of the second inductor, L4 is inductance of the fourth inductor, and C7 is capacitance of the seventh capacitor.

4. The step-down converter of claim 1 or 2, wherein the step-down converter satisfies

$$0.5 \times C3 \times \left\{ L4 \div \left( \frac{L1 \times L2}{L1 + L2} \right) \right\} \leqq C7 \leqq 2 \times C3 \times \left\{ L4 \div \left( \frac{L1 \times L2}{L1 + L2} \right) \right\}$$

where C3 is capacitance of the third capacitor, L1 is inductance of the first inductor, L2 is inductance of the second inductor, L4 is inductance of the fourth inductor, and C7 is capacitance of the seventh capacitor.

5. The step-down converter of claim 2, further comprising an eighth capacitor connected between the fifth node and the second node.

6. The step-down converter of claim 5, wherein
the step-down converter satisfies

$$C7 + C8 = C3 \times \left\{ L4 \div \left( \frac{L1 \times L2}{L1 + L2} \right) \right\}$$

where C3 is capacitance of the third capacitor, L1 is inductance of the first inductor, L2 is inductance of the second inductor, L4 is inductance of the fourth inductor, C7 is capacitance of the seventh capacitor, and C8 is capacitance of the eighth capacitor.

7. The step-down converter of claim 5, wherein
the step-down converter satisfies

$$0.5 \times C3 \times \left\{ L4 \div \left( \frac{L1 \times L2}{L1 + L2} \right) \right\} \leqq (C7 + C8) \leqq 2 \times C3 \times \left\{ L4 \div \left( \frac{L1 \times L2}{L1 + L2} \right) \right\}$$

where C3 is capacitance of the third capacitor, L1 is inductance of the first inductor, L2 is inductance of the second inductor, L4 is inductance of the fourth inductor, C7 is capacitance of the seventh capacitor, and C8 is capacitance of the eighth capacitor.

8. The step-down converter of any one of claims 1 to 7, wherein

the first inductor is configured by a part of the first positive-side wiring section,
the second inductor is configured by a part of the first negative-side wiring section, and
the fourth inductor is configured by a part of the second negative-side wiring section.

9. The step-down converter of any one of claims 1 to 8, wherein

the third inductor is a choke coil, and
the third capacitor is interwinding capacitance of the choke coil.

**10.** The step-down converter of any one of claims 1 to 9, further comprising a resistor connected to the seventh capacitor in series between the fifth node and the second node.

*FIG. 1*

100

T1 — W11 — N1 — 11 — N3 — Q1 — N5 — 13 — N6 — N8 — W21 — T3

1 (capacitor) — 2 (capacitor) — 3 (capacitor) — 4 (capacitor) — 5 (capacitor) — 6 (capacitor) — 7 (capacitor)

T2 — W12 — N2 — 12 — N4 — Q2 — 14 — N7 — W22 — N9 — T4

Controller 10

9

FIG. 2

EP 4 657 739 A1

FIG. 3

*FIG. 4*

100

*FIG. 5*

FIG. 6

EP 4 657 739 A1

FIG. 7

EP 4 657 739 A1

FIG. 8

EP 4 657 739 A1

FIG. 9

EP 4 657 739 A1

FIG. 10

## INTERNATIONAL SEARCH REPORT

| International application No. |
|---|
| **PCT/JP2024/000694** |

**A.    CLASSIFICATION OF SUBJECT MATTER**

*H02M 3/155*(2006.01)i
FI:   H02M3/155 E

According to International Patent Classification (IPC) or to both national classification and IPC

**B.    FIELDS SEARCHED**

Minimum documentation searched (classification system followed by classification symbols)

H02M3/155

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | WO 2021/124758 A1 (MURATA MANUFACTURING CO., LTD.) 24 June 2021 (2021-06-24)<br>entire text, all drawings | 1-10 |
| A | JP 2016-174502 A (TOYOTA JIDOSHA KABUSHIKI KAISHA) 29 September 2016 (2016-09-29)<br>entire text, all drawings | 1-10 |
| A | JP 2003-047235 A (AUTONETWORKS TECHNOLOGIES LTD.) 14 February 2003 (2003-02-14)<br>entire text, all drawings | 1-10 |

☐ Further documents are listed in the continuation of Box C.　　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **22 March 2024** | **02 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/000694**

| Patent document cited in search report | | | Publication date (day/month/year) | Patent family member(s) | | | Publication date (day/month/year) |
|---|---|---|---|---|---|---|---|
| WO | 2021/124758 | A1 | 24 June 2021 | US entire text, all drawings CN | 2022/0302832 114846732 | A1 A | |
| JP | 2016-174502 | A | 29 September 2016 | (Family: none) | | | |
| JP | 2003-047235 | A | 14 February 2003 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017002550 A1